(19) Europäisches Patentamt / European Patent Office / Office européen des brevets

(11) **EP 4 614 632 A1**

(12) # EUROPEAN PATENT APPLICATION

(43) Date of publication:
**10.09.2025 Bulletin 2025/37**

(21) Application number: **24305331.1**

(22) Date of filing: **05.03.2024**

(51) International Patent Classification (IPC):
*H01M 8/08* (2016.01)  *H01M 8/16* (2006.01)

(52) Cooperative Patent Classification (CPC):
**H01M 8/16; H01M 8/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BeFC**
**38000 Grenoble (FR)**

(72) Inventors:
• **AURILIO, Anne-Claire**
**38330 Saint-Ismier (FR)**

• **BRY, Lauryne**
**38130 Echirolles (FR)**
• **CESBRON, Marius**
**38610 Gieres (FR)**
• **D'ACCRISCIO, Florian**
**38190 Les Adrets (FR)**
• **HAMMOND, Jules**
**38610 Gieres (FR)**
• **SOLAN, Sébastien**
**38320 Eybens (FR)**

(74) Representative: **Novagraaf Technologies
Bâtiment O2
2, rue Sarah Bernhardt
CS90017
92665 Asnières-sur-Seine Cedex (FR)**

(54) ## DEEP EUTECTIC SOLVENTS-BASED ELECTROLYTE COMPOSITIONS

(57) The present invention relates to an electrolyte composition improved with deep eutectic-solvents-based, for activation of an energy harvester or energy storage device.

FIGURE 10

EP 4 614 632 A1

## Description

### Technical field of the invention

The present invention relates to improved electrolyte compositions based on deep eutectic solvents (DES), for activation of an energy harvester or energy storage device.

In the description below, references in square brackets ([ ]) refer to the list of references at the end of the text.

### State of the art

Energy harvester and energy storage devices attracted a lot of attention in the past few years. Among energy harvester, solar cell or fuel cell can convert solar energy or chemical reaction into electricity. Among energy storage devices, batteries and supercapacitors are able to store the electricity produce at one time for a use at a later time, thus reducing imbalances between energy demand and energy production. Combined together, these two families of devices have unlocked the raise of internet of things (IOT) [1,2].

Among energy harvester devices, biological fuel cells (biofuel cells) offer an attractive means to provide eco-friendly and sustainable power to electronic devices, particularly for small portable devices for applications such as healthcare, environmental monitoring, bio-defense, etc. Given that enzyme-based fuel cells can operate using substrates that are abundant in the biological fluids and environmental effluent (i.e., glucose and oxygen) whilst exhibiting power densities that are often superior to microbial fuel cells, they offer an attractive proposition to augment or self-powered miniaturized wearable or implantable devices [3,4,5]. Furthermore, paper-based devices are gaining popularity as propositions for these types of applications owing to their low mass, small form factor and flexibility, allowing them to conform to a range of different surfaces.

Biofuel cells are activated using an electrolyte. This allows a proton flow that enables the anode and cathode to supply energy. After activation, this electrolyte, which is largely composed of water ($H_2O$), evaporates and the biofuel cell loses efficiency (too short lifetime for its applications).

Therefore, there is still the need of an electrolyte solution that would allow to reduce evaporation and extend the biofuel cells life.

### Description of the invention

To deal with this problem, a deep eutectic solvent (DES) was introduced into an electrolyte to form an activation solution with reduced evaporation. DES are considered as an emerging class of green solvents related to ionic liquids. DES are a mixture of weak Lewis acids (hydrogen bond donors) and bases (hydrogen bond acceptors) which may contain cationic and/or anionic species mixed with non-ionic species leading to supramolecular structures. In order to avoid using metal-based deep eutectic solvents, the deep eutectic solvents used are natural deep eutectic solvent, (NaDES) [6]. This ensures that the electrolyte is environmentally friendly and avoids poisoning the enzymes used in the biofuel cell [7]. The aim is to obtain an electrolyte that would extend the life of the biofuel cell, enable it to be used as a proton transfer agent (facilitating proton flow from the anode to the cathode) and improve the performance of the biofuel cell while remaining environmentally friendly. In addition, the inventors have unexpectedly demonstrated that to ensure higher and longer biofuel cell performance in the presence of DES, the composition of the present invention has been produced with a higher critical dilution of DES in the electrolyte (about 30-40%) than is known in the art (>50%), to avoid crystallization after evaporation of the solvent (water in general) [8,9].

Examples of hydrogen bond acceptors and hydrogen bond donors:

| Hydrogen Bond Acceptors | Hydrogen Bond Donors |
|---|---|
| Choline Chloride | Urea |
| Betaine | Xylitol |
| Proline | Glycerol |
| Alanine | Ethylen Glycol |
| Choline Dihydrogen Citrate | Lactic Acid |
| EthylAmonium Chloride | (D)-Sorbitrol |
| Trimethylammonium Chloride | Malic Acid |
| Choline Acetate | Oxalic Acid |
| Tetrabutylammonium bromide | Acetamide |
| DL-Menthol | Thiourea |

(continued)

| Hydrogen Bond Acceptors | Hydrogen Bond Donors |
|---|---|
| Tetrabutulphosphonium bromide | 1,2-Propanediol |

An object of the present invention is therefore a deep eutectic solvent-based electrolyte composition (DES A, X, C, Y) comprising in a solvent (i) a hydrogen bond acceptor chosen from choline dihydrogen citrate (ChDHC) and choline chloride (ChCl), and (ii) at least one, two or three of the following hydrogen bond donors:

- at least one polyol; and
- glucose.

According to a particular embodiment of the present invention, the deep eutectic solvent-based electrolyte composition (DES X, C, Y) comprises in a solvent, at least three or four of the following metabolites:

- choline dihydrogen citrate (ChDHC);
- at least one polyol; and
- glucose.

According to a particular embodiment of the composition of the present invention, the at least one polyol which is an organic compound characterized by a number of hydroxyl groups (-OH), is selected from the group consisting of ethylene glycol, glycerol and xylitol.

For example, the composition of the present invention comprises or consists of choline chloride and ethylene glycol (DES A). In particular said composition comprises choline chloride and ethylene glycol at a molar ratio of 1:2.

For example, the composition of the present invention comprises or consists of choline dihydrogen citrate (ChDHC), glycerol and glucose (DES C). In particular said composition comprises choline dihydrogen citrate (ChDHC), glycerol and glucose at a molar ratio of 1:1:2.5.

For example, the composition of the present invention comprises or consists of choline dihydrogen citrate (ChDHC), xylitol and glucose (DES Y). In particular said composition comprises choline dihydrogen citrate (ChDHC), xylitol and glucose at a molar ratio of 2:1:1.

For example, the composition of the present invention comprises or consists of choline dihydrogen citrate (ChDHC), glycerol, xylitol and glucose (DES X). In particular said composition comprises choline dihydrogen citrate (ChDHC), glycerol, xylitol and glucose at a molar ratio of 3:1:1:1.

According to a particular embodiment of the present invention, the composition of the present invention is used at a dilution of 30-40%.

According to a particular embodiment of the composition of the present invention the solvent is at least one polar solvent, preferably is water.

According to a particular embodiment of the present invention, the composition of the present invention is used at a dilution from about 33wt% to about 40wt% in the electrolyte solution, preferably at a dilution of about 39wt%.

Another object of the present invention is the use of the composition of the present invention, to activate an energy harvester or energy storage device, for example a biofuel cell.

**Brief description of the figures**

Figure 1 represents OCV value for each condition of electrolyte with DES.
Figure 2 represents E and P fct(I) - 100ms with (A) electrolyte reference (B) DES C dilute at 20wt%.
Figure 3 represents E and P fct(I) - 100ms with (A) pure DES A (B) DES A dilute at 20wt%.
Figure 4 represents (A) OCV and (B) CV, for cathodic half-cell with Laccase at different dilutions of DES Y.
Figure 5 represents (A) OCV and (B) CV, for anodic half-cell with Glucose oxidase at different dilutions of DES Y.
Figure 6 represents value of Pmax at different dilutions of DES Y for polarization (A) at 100ms (B) at 2s and (C) at 5s.
Figure 7 represents (A) OCV and (B) CV, for cathodic half-cell with Laccase at different dilutions of DES X.
Figure 8 represents (A) OCV and (B) CV, for anodic half-cell with Glucose oxidase at different dilutions of DES X.
Figure 9 represents value of Pmax at different dilution of DES X for polarization (A) at 100ms (B) at 2s, and (C) at 5s.
Figure 10 represents microscopic (x5) at (A) 10wt% (B) 15wt% (C) 25wt% (D) 30wt% (E) 33wt% (F) 36wt% and (G) 40wt% of DES X (crystal size >100$\mu$m).
Figure 11 represents Emax (V) for each dilution of DES X over time.

Figure 12 represents value of Pmax values for polarization at (A) 100ms, (B) 2s and (5C) 5s, for each dilution of DES X over time.

## EXAMPLES

### EXAMPLE 1 : MATERIALS AND METHODS

Electrolytes without (reference) or with different DES were produced according to the following experimental datas:

Electrolyte reference tested (Ref): 0.1M NaPB (sodium phosphate buffer) + 0.25M $Na_2SO_4$ + 0.2M glucose

Electrolyte containing DES: [0.1M NaPB + 0.25M $Na_2SO_4$ + 0.2M glucose ] + x wt% DES

Order of addition is (i) NaPB, (ii) Na2SO4, (iii) glucose and (iv) DES. For anodic half cell testing and full cell activation, quinone-based mediator (1mM) (such as 1-10phenanthroline-5,6dione (PLQ), 9,10-phenanthrenequinone (PQ), Naphtoquinone), must be added to the mixture prior to DES addition.

| Name | DES A | DES C | DES Y | DES X |
|---|---|---|---|---|
| Ratio molaire | (1:2) | (1:1:2.5) | (1:1:2) | (1:1:1:3) |
| Products | 1) ChCL<br>2) Ethylene glycol | 1) Glucose<br>2) Glycerol<br>3) ChDHC<br>4) $H_2O$ with 0.5M of $Na_2SO_4$ | 1) Xylitol<br>2) Glucose<br>3) ChDHC | 1) Xylitol<br>2) Glucose<br>3) Glycerol<br>4) ChDHC<br>5) $H_2O$ |

General protocol for DES preparation:

Weigh in a 400 mL glass bottle the mass of the different metabolites.

DI-water is then added to help forming hydrogen bonds.

For DES C there is 8.75 wt% of water and for DES X there is 16.05 wt%.

To promote the formation of hydrogen bonds between donor and acceptor species, energy must be supplied to the system. To achieve this, it is necessary to apply agitation and/or ultrasonic wave. Energy must be applied until the mixture is fully liquid, limpid and homogeneous.

### EXAMPLE 2: TEST OF ELECTROLYTES WITH DIFFERENT DES

### A- Test on printed full biofuel cell with electrolyte with DES C or DES A

**Equipment:** Biologic MPG-2-105
**Software:** EC-Lab
**Materials: Development process:** INK01-An / INK002-Ca

**Enzymes:**

Cathodes were prepared with Laccase as catalyst and anode with Glucose oxidase as catalyst.

**Parameters:**

At ambient temperature.
For each DES on each dilution, there are 6 repetitions per DES.

**Test conditions:**

6 full cells were tested for the 3 types of electrolytes containing DES and 6 full cells were tested with the reference electrolyte.

**Settings of EC-Lab:**

Polarisation: current discharge (I) from $10\,\mu A$ to $600\,\mu A$ giving a potential (E) at each discharge. The power can be then obtained:

$$P\ (\mu W/cm^2) = E\ (V)\ x\ I\ (\mu A)$$

| DES | Ratio | Dilutions tested [Ref] / DES |
|---|---|---|
| <u>DES A:</u><br>Choline chloride (ChCl)<br>Ethylene glycol | 1:2 | 0%wt / 100%wt<br><br>80%wt / 20%wt |
| <u>DES C:</u><br>Choline dihydrogen citrate (ChDHC)<br>glycerol<br>glucose<br>+ 20% water, 0.5M $Na_2SO_4$ | 1:2.5:1 | |

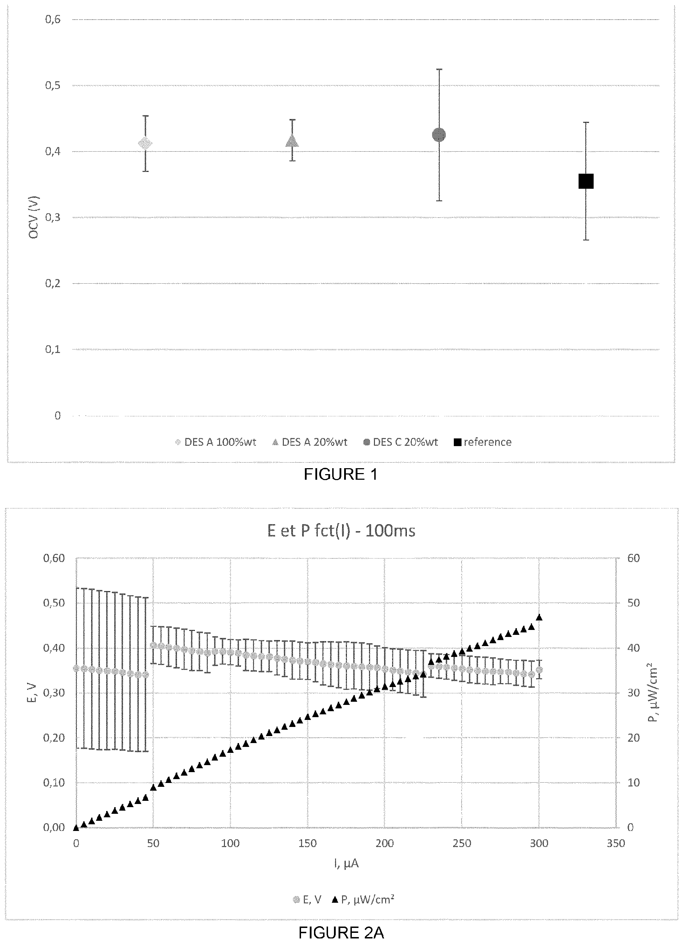

Figure 1 represents the OCV (Open Circuit voltage) values for each condition of electrolyte with DES. The value of OCV is better in conditions with DES than without. But the OCV values are similar between electrolyte with DES A or DES C for each dilution.

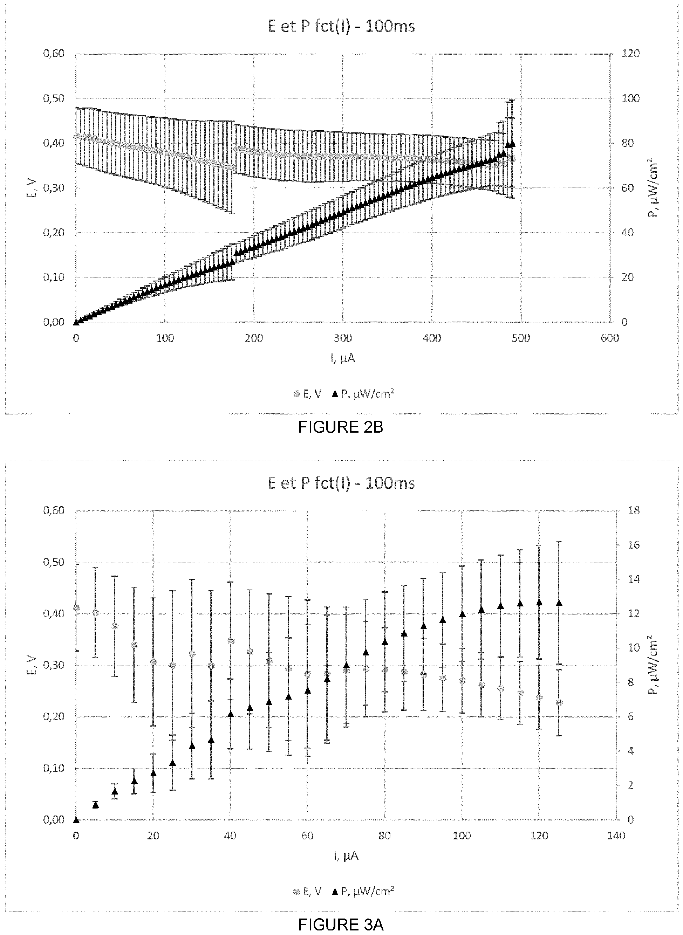

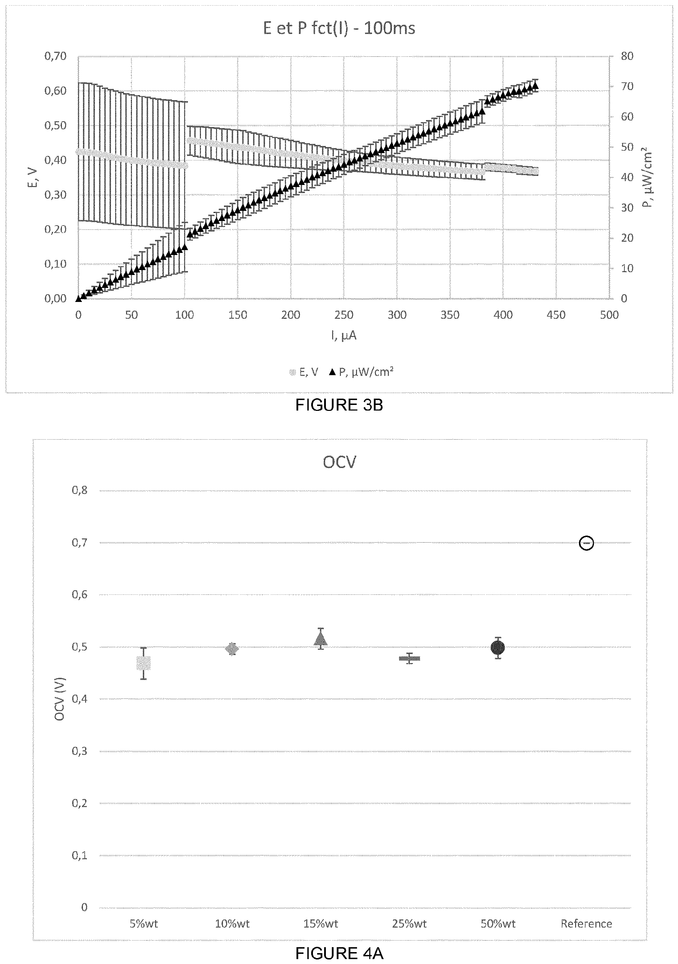

Figures 2 and 3 represent the potential (E) and power (P) tested with different conditions of electrolytes with DES C and DES A, respectively. The results are also presented in the table 1 below.

Table 1

| DES C | Reference | Pure* | 20wt% |
|---|---|---|---|
| Pmax ($\mu W/cm^2$) | 48 | / | 55 |
| Emax (V) | 0.49 | / | 0.45 |
| Nb of cycle min | 9 | / | 20 |
| **DES A** | **Reference** | **Pure** | **20wt%** |
| Pmax ($\mu W/cm^2$) | 48 | 13 | 50 |
| Emax (V) | 0.49 | 0.42 | 0.25 |
| Nb of cycle min | 9 | 4 | 35 |
| *It is to be noted that the tests with pure DES C have not functioned because the viscosity of DES C is too high for having a good diffusion of electrolyte. | | | |

It is observed that with the DES A and DES C diluted at 20wt% with the electrolyte reference, there are not difference of Pmax but that Pmax is better with 20wt% DES than without (Reference).

**B- <u>Half cell printed electrode test with electrolyte including DES Y</u>**

The aim of this test was to observe the effect of different electrolytes with DES on the performances of the electrodes, and deduce whether the environment is suitable or not for the enzyme.

    **Equipment:** Biologic MPG-2-105
    **Software:** EC-Lab
    **Materials: Development process:** INK03-An / INK04-Ca

**Enzymes:**

Cathodes were prepared with Laccase as catalyst and anode with Glucose oxidase as catalyst.

**Parameters:**

At ambient temperature.
For each dilution there are 6 repetitions for a total of 24 cathodic half cells and 24 anodic half cells per dilution + 6 anodic half-cell and 6 cathodic half-cell for the reference.

**Settings of EC-Lab:**

OCV = correspond to the potential when there is not current applied, during 3 min.
CV (Cyclic Voltammetry) = a potential of 0.7V to 0V with scan rate 1mV is imposed for the cathode. For anode a potential -0.4V to 0.5V with scan rate of 2mV is imposed.

| DES | Ratio | Dilutions tested [Ref] / DES |
|---|---|---|
| DES Y:<br>Choline dihydrogen citrate (ChDHC)<br>Xylitol<br><br>Glucose | 2:1:1 | 95%wt / 5%wt<br>90%wt / 10%wt<br>85%wt / 15%wt<br>75%wt / 25%wt<br>50%wt / 50%wt |

Observations of OCV and CV of cathode INK04-Ca at 5wt%, 10wt%, 15wt%, 25wt% and 50wt%.

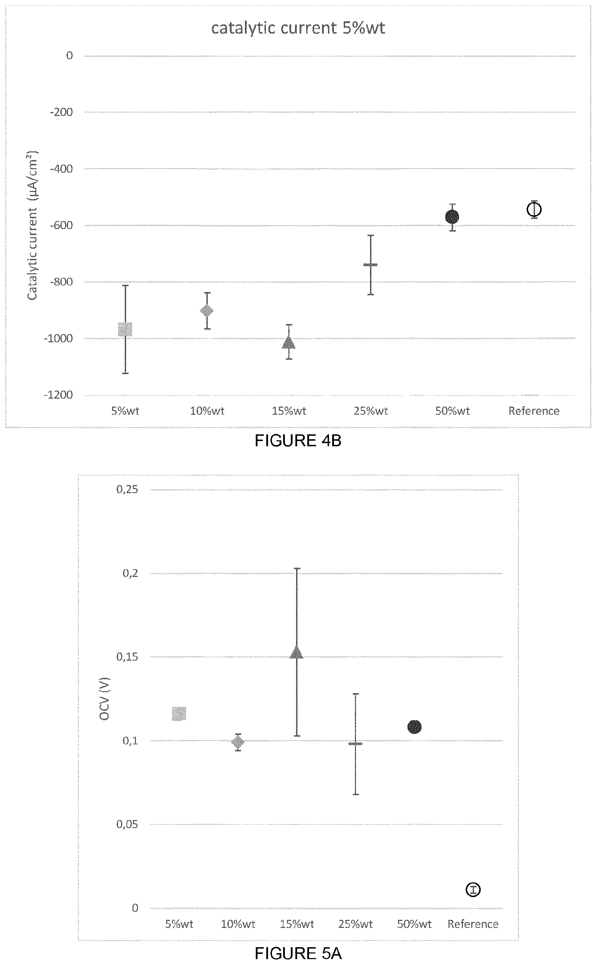

For the OCV at the cathode, it is necessary that the value is the highest possible. Figure 4 represents OCV and CV for cathodic half-cell with Laccase for different dilutions of DES Y. The results are also represented in the table 2 below.

Table 2: value of OCV and catalytic current for !NK04-Ca with different dilutions of DES Y

| Ratio | OCV (V) | Imax ($\mu A/cm^2$) | E (V) |
|---|---|---|---|
| Reference | 0.699 | -544 | 0 |
| 5wt% | 0.468 | -967.5 | 0.072 |
| 10wt% | 0.496 | -901.9 | 0.072 |
| **15wt%** | **0.516** | **-1011.23** | **0.42** |
| 25wt% | 0.478 | -739.5 | -0.001 |
| 50wt% | 0.498 | -571.04 | 0.022 |

The best ratio of DES Y in electrolyte for cathodic side is at 15%wt with a value of Imax twice as high than the reference. But the optimum is between 5 and 15%wt, if we take into account the error deviation.

Observations of OCV and CV of anode INK03-An at 5wt%, 10wt%, 15wt%, 25wt% and 50wt%.

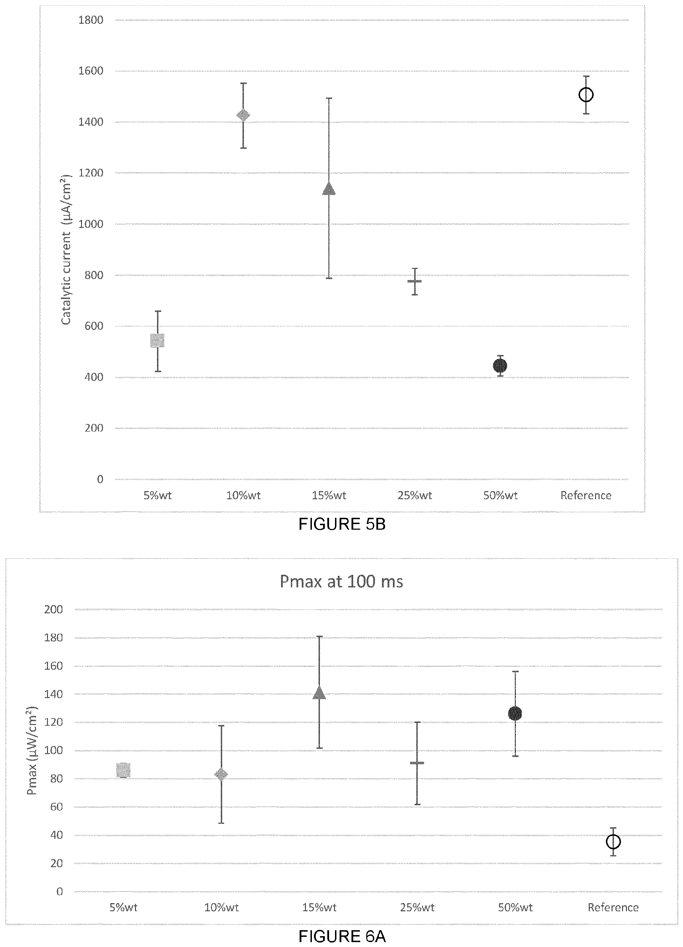

For the OCV at the anode, it is necessary that the value is the least possible. The same phenomenon was observed in different experiences at the different dilutions. Figure 5 represents OCV and CV for anodic half-cell with different dilutions of DES Y. The results are also represented in the table 3 below.

Table 3: value of OCV and catalytic current for INK03-An with different dilutions of DES Y

| Ratio | OCV (V) | Imax ($\mu A/cm^2$) | E (V) |
|---|---|---|---|
| Reference | 0.011 | 1506 | 0 |
| 5wt% | 0.116 | 541.7 | 0.386 |
| **10wt%** | **0.099** | **1426.0** | **0.335** |
| 15wt% | 0.153 | 1141.3 | 0.4 |
| 25wt% | 0.098 | 775.4 | 0.24 |

(continued)

| Ratio | OCV (V) | Imax ($\mu$A/cm$^2$) | E (V) |
|---|---|---|---|
| 50wt% | 0.108 | 444.81 | 0.308 |

The best ratio of DES Y in electrolyte for the anodic electrode is at 10%wt with a value of Imax equal to the reference.

## C- Test on printed full cell electrode with electrolyte containing DES Y

The aim of this test was to observe the effect of different electrolytes with DES Y on the performances of the electrodes, and deduce whether the environment is suitable or not for the enzyme. The electrochemical performance is measured for the same dilutions of DES Y in full-cell printed.

**Equipment:** Biologic MPG-2-105
**Software:** EC-Lab
**Materials: Development process:** INK03-An / INK04-Ca

### Enzymes:

Cathodes were prepared with Laccase as catalyst and anode with Glucose oxidase as catalyst.

### Parameters:

At ambient temperature.
For each dilution there is 6 repetitions for a total of 24 full cells.

### Settings of EC-Lab:

OCV = correspond to the potential when there is not current applied, during 3 min.
Polarization = Current discharge (I) from 10 $\mu$A to 600 $\mu$A giving a potential (E) at each discharge. Power can then be obtained. The polarization at 100ms, 2s and 5 seconds was used.

Observations of OCV at 5wt%, 10wt%, 15wt%, 25wt% and 50wt%.

Table 4: value of OCV with different dilutions ofd DES Y

| Ratio | OCV (V) |
|---|---|
| Reference | 0.335 |
| 5wt% | 0.498 |
| 10wt% | 0.477 |
| **15wt%** | **0.558** |
| 25wt% | 0.44 |
| 50wt% | 0.52 |

The best ratio of DES Y in electrolyte is at 15%wt with a value of Imax twice as high as the reference.

Observations of the value of Pmax at 5wt%, 10wt%, 15wt%, 25wt% and 50wt% for polarization at 100ms

Figure 6A represents the value of Pmax at different dilutions of DES Y for polarization at 100ms. The results are also represented in the table 5 below.

Table 5: Value Pmax fct E (V) at different dilutions of DES Y

| Ratio | Pmax ($\mu$W/cm$^2$) | E (V) |
|---|---|---|
| Reference | 35.4 | 0.27 |
| 5wt% | 86 | 0.291 |
| 10wt% | 83 | 0.302 |
| **15wt%** | **141.4** | **0.356** |
| 25wt% | 91 | 0.331 |
| 50wt% | 126.2 | 0.337 |

The highest value of Pmax is obtained with the ratio of 15wt% in DES Y with a value three times higher than the reference, i.e. 140$\mu$W/cm$^2$ against 40$\mu$W/cm$^2$ respectively.

Observations of the value of Pmax at 5wt%, 10wt%, 15wt%, 25wt% and 50wt% for polarization at 2s

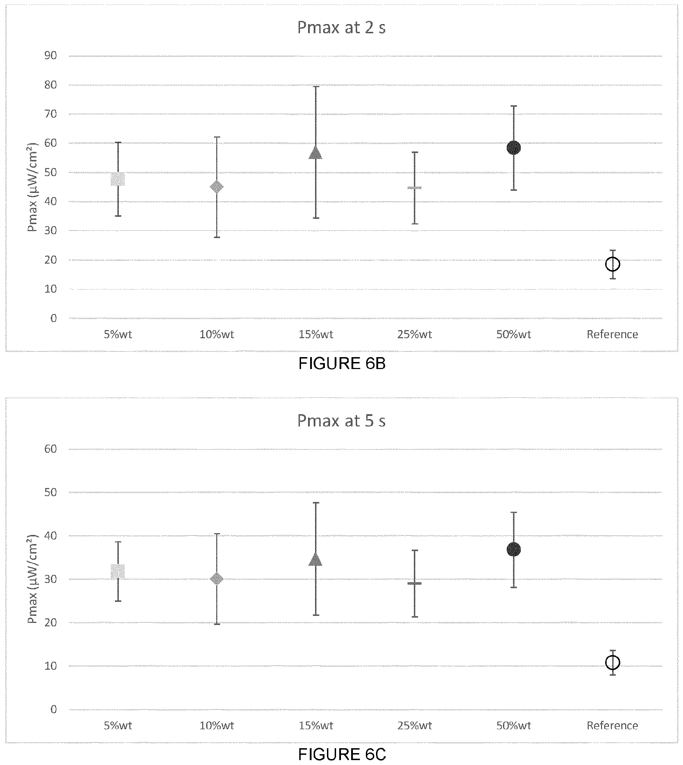

Figure 6B represents value of Pmax at different dilutions of DES Y for polarization at 2s. The results are also represented in the table 6 below.

Table 6: value Pmax fct E (V) at different diluations of DES Y

| Ratio | Pmax ($\mu$W/cm$^2$) | E (V) |
|---|---|---|
| Reference | 18.5 | 0.179 |
| 5wt% | 47.7 | 0.022 |
| 10wt% | 45 | 0.218 |
| **15wt%** | **56.9** | **0.262** |
| 25wt% | 44.6 | 0.221 |
| **50wt%** | **58.4** | **0.203** |

The highest value of Pmax is obtained with a ratio of 15wt% and 50wt% in DES Y with the value three times higher than the reference, 60$\mu$W/cm$^2$ against 20$\mu$W/cm$^2$ respectively.

Observations of the value of Pmax at 5wt%, 10wt%, 15wt%, 25wt% and 50wt% for polarization at 5s

Figure 6C represents value of Pmax at different dilutions of DES Y for polarization at 5s. The results are also represented in the table 7 below.

Table 7: value Pmax fct E (V) at different diluations of DES Y

| Ratio | Pmax ($\mu$W/cm$^2$) | E (V) |
|---|---|---|
| Reference | 10.8 | 0.161 |
| 5wt% | 31.8 | 0.219 |
| 10wt% | 30.1 | 0.219 |
| **15wt%** | **34.7** | **0.24** |
| 25wt% | 29 | 0.229 |
| **50wt%** | **36.8** | **0.227** |

The highest value of Pmax is obtained with the ratio of 15wt% and 50wt% in DES Y with a value three times higher than the reference.

Ideally, the value of Pmax must be the highest possible. The higher the value of Pmax during an important polarization, the most current can be drawn from the full-cell.

Two dilutions with the best performances were observed: 15wt% and 50wt%. Indeed, with these two dilutions, the highest electrochemical performances are obtained than the reference.

## D- Half-cell test on printed electrode with electrolyte containing DES X

The aim of this test is to observe the effect of different electrolytes with DES on the performances of the electrodes, and deduce whether the environment is suitable or not for the enzyme.

**Equipment:** Biologic MPG-2-105
**Software:** EC-Lab
**Materials: Development process:** INK05-An / INK06-Ca

**Enzymes:**

Cathodes were prepared with Laccase as catalyst and anode with Glucose oxidase as catalyst.

**Parameters:**

At ambient temperature.
For each dilution there is 6 repetitions for a total of 24 cathodic half cells and 24 anodic half cells + 6 anodic half-cells and 6 cathodic half-cell for reference.

**Settings of EC-Lab:**

OCV = correspond to the potential when there is not current applied, during 3 min.
CV (Cyclic Voltammetry) = a potential from 0.7V to 0V with scan rate 1mV was imposed for the cathode. For anode a potential -0.4V to 0.5V with scan rate of 2mV was imposed.

| Solution of DES | | |
|---|---|---|
| **DES** | **Ratio** | **Dilutions tested [Ref] / DES** |
| DES X:<br>Choline dihydrogen citrate (ChDHC)<br>Xylitol<br>Glucose<br>glycerol | 3:1:1:1 | 95%wt / 5%wt<br>90%wt / 10%wt<br>85%wt / 15%wt<br>75%wt / 25%wt<br>50%wt / 50%wt |

Observations of OCV and CV of INK06-Ca at 5wt%, 10wt%, 15wt%, 25wt% and 50wt%.

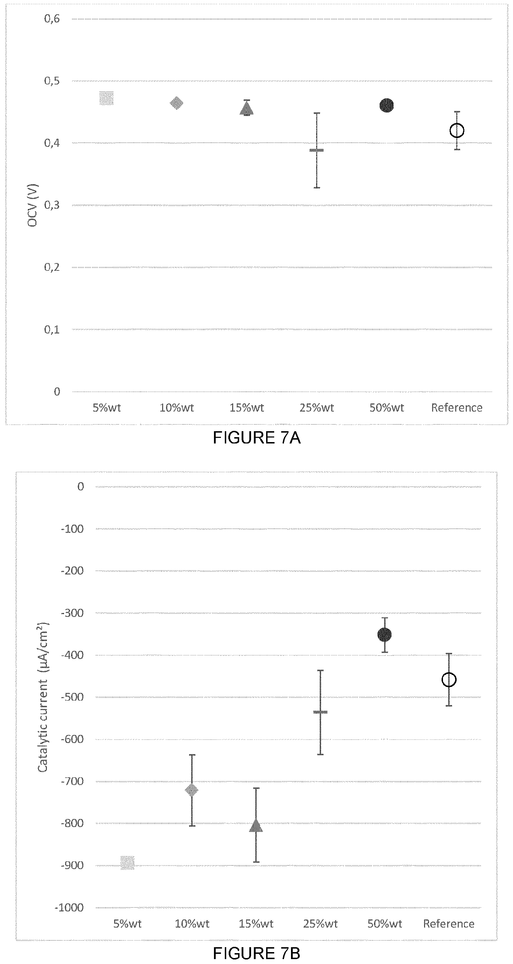

For the OCV at the cathode, it is necessary that the value is the highest possible. Figure 7 represents OCV and CV for INK06-Ca with different dilutions of DES X. The results are also represented in the table 8 below.

Table 8: value of OCV and catalytic current for !NK06-Ca with different dilutions of DES X

| Ratio | OCV (V) | Imax ($\mu$A/cm$^2$) | E (V) |
|---|---|---|---|
| Reference | 0.420 | -458 | 0.025 |
| **5wt%** | **0.472** | **-894** | **0.025** |
| 10wt% | 0.464 | -721 | 0.015 |
| **15wt%** | **0.457** | **-804** | **0.0005** |
| 25wt% | 0.388 | -536 | 0.01 |
| 50wt% | 0.460 | -352 | -0.001 |

The best % of DES X in electrolyte for cathodic electrode is at 5wt%w and 15wt% with a value of Imax increased by 2 compared to the reference.

Observations of OCV and CV of INK05-An at 5wt%, 10wt%, 15wt%, 25wt% and 50wt%.

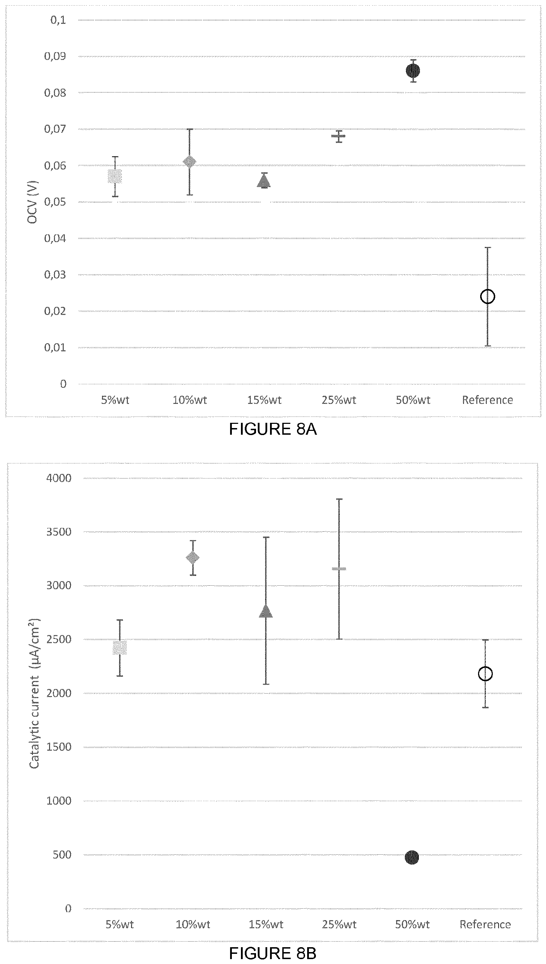

For the OCV at the anode it is best to reach the lowest value possible, to obtain the greatest difference between anode and cathode OCV.. Figure 8 represents OCV and CV for anodic half-cell with different dilutions of DES X. The results are also represented in the table 9 below.

Table 9: value of OCV and catalytic current for INK05-An with different dilutions of DES X

| Ratio | OCV (V) | Imax ($\mu$A/cm$^2$) | E (V) |
|---|---|---|---|
| Reference | 0.057 | 2183 | 0.28 |
| 5wt% | 0.057 | 2422 | 0.41 |
| 10wt% | 0.061 | 3260 | 0.4 |
| **15wt%** | **0.056** | **2767** | **0.38** |
| 25wt% | 0.068 | **3155** | 0.40 |
| 50wt% | 0.086 | 472 | 0.17 |

The best ratio of DES in electrolyte for anodic side is at 15%wt and 25%wt.
For the ratio at 25wt% we observe a maximum catalytic current reached at 0.17 V, which is different from other conditions.
The maximum catalytic current at the cathodic and anodic side must be reached and the OCV of each electrode must be as opposite as possible good performances in full cell.
This is why from all the previous tests it can be concluded that:

1. For the cathode INK06-Ca, the optimum dilution of DES X is between 5%wt and 15%wt.
2. For the anode INK05-An, the optimum dilution of DES X is between 10 and 15 %wt but the value of OCV and catalytic current are higher than the reference

It can be concluded that the DES X in electrolyte presents good electrochemical performances and can be a relevant candidate for increasing lifetime.

### E- Printed full cell test with electrolyte containing DES X

The aim of this experiment is to observe the effect of different electrolytes with DES on the performances of the electrode, and define whether the environment is suitable or not for the enzyme.

**Equipment:** Biologic MPG-2-105
**Software:** EC-Lab
**Materials: Development process:** INK05-An / INK06-Ca

**Enzymes:**

Cathodes were prepared with Laccase as catalyst and anode with Glucose oxidase as catalyst.

**Parameters:**

At ambient temperature.
For each dilution there are 6 repetitions for a total of 24 full cells.

**Settings of EC-Lab:**

OCV = correspond to the potential when there is not current applied, during 3 min.
Polarization = current discharge (I) from 10 $\mu$A to 600 $\mu$A giving a potential (E) at each discharge. The power can thus be obtained. The polarization at 100ms, 2s and 5 seconds was used.

| Solution of DES | | |
|---|---|---|
| DES | Ratio | Dilutions tested [Ref] / DES |
| DES X:<br>Choline dihydrogen citrate (ChDHC)<br>Xylitol<br>Glucose<br>glycerol | 3:1:1:1 | 95%wt / 5%wt<br>90%wt / 10%wt<br>85%wt / 15%wt<br>75%wt / 25%wt<br>50%wt / 50%wt |

Observations of OCV at 5wt%, 10wt%, 15wt%, 25wt% and 50wt%

Table 10: value of OCV with different dilutions of DES X

| Ratio | OCV (V) |
|---|---|
| Reference | 0.422 |
| 5wt% | 0.414 |
| **10wt%** | **0.437** |
| 15wt% | 0.407 |
| 25wt% | 0.41 |
| 50wt% | 0.366 |

Considering only OCV, the best ratio of DES X in electrolyte is at 10wt% with a value of OCV equivalent to the reference.

Observations of the value of Pmax at 5wt%, 10wt%, 15wt%, 25wt% and 50wt% for polarization at 100ms

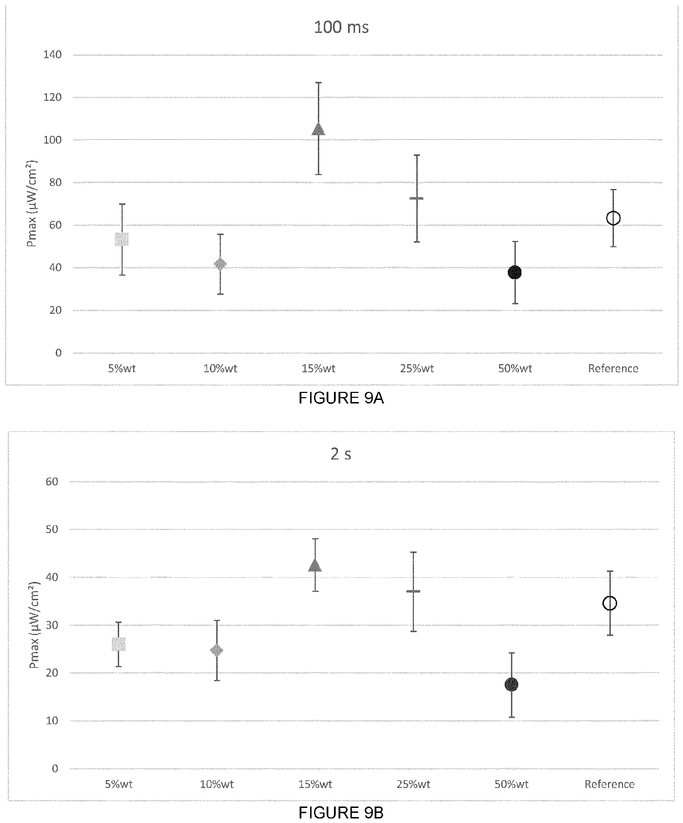

Figure 9A represents value of Pmax at different dilutions of DES X for polarization at 100ms. The results are also represented in the table 11 below.

Table 11: Value Pmax fct E(V) at different dilutions of DES X

| Ratio | Pmax ($\mu$W/cm$^2$) | E (V) |
|---|---|---|
| Reference | 63.3 | 0.29 |
| 5wt% | 53.2 | 0.27 |
| 10wt% | 41.6 | 0.29 |
| **15wt%** | **105.3** | **0.32** |
| 25wt% | 72.5 | 0.29 |
| 50wt% | 37.7 | 0.26 |

The highest value of Pmax is obtained with the ratio of 15wt% in DES X with a value higher than the reference. With 15wt% of DES X, $105\mu$W/cm$^2$ was obtained against $63\mu$W/cm$^2$ for the reference demonstrating an overall improvement of ca. 65%.

Observations of the value of Pmax at 5wt%, 10wt%, 15wt%, 25wt% and 50wt% for polarization at 2s

Figure 9B represents value of Pmax at different dilutions of DES X for polarization at 2s. The results are also represented in the table 12 below.

Table 12: Value Pmax fct E(V) at different dilutions of DES X

| Ratio | Pmax ($\mu$W/cm$^2$) | E (V) |
|---|---|---|
| Reference | 34.6 | 0.22 |
| 5wt% | 26 | 0.21 |
| 10wt% | 24.7 | 0.25 |
| **15wt%** | **42.6** | **0.18** |
| 25wt% | 37 | 0.18 |
| 50wt% | 17.5 | 0.13 |

The highest value of Pmax is obtained with the ratio of 15wt% in DES X with a value higher than the reference. With 15wt% of DES X, 42$\mu$W/cm$^2$ was obtained against 341$\mu$W/cm$^2$ for the reference.

Observations of the value of Pmax at 5wt%, 10wt%, 15wt%, 25wt% and 50wt% for polarization at 5s

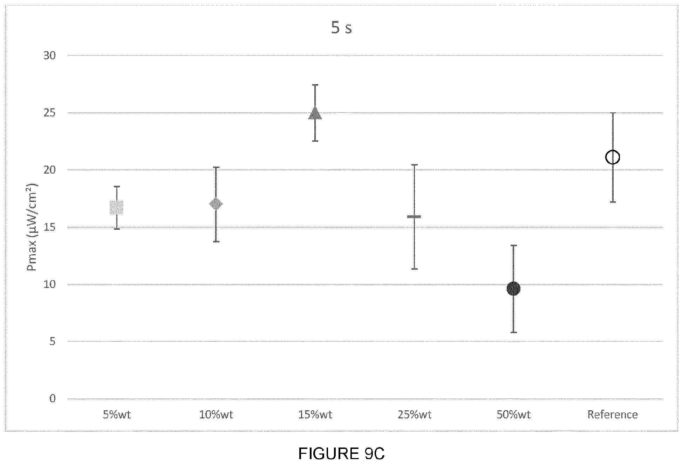

Figure 9C represents value of Pmax at different dilutions of DES X for polarization at 5s. The results are also represented in the table 13 below.

Table 13: value of Pmax fct E (V) at different dilutions of DES X

| Ratio | Pmax ($\mu$W/cm$^2$) | E (V) |
|---|---|---|
| Reference | 21.1 | 0.161 |
| 5wt% | 16.7 | 0.219 |
| 10wt% | 17 | 0.219 |
| **15wt%** | **25** | **0.24** |
| 25wt% | 15.9 | 0.229 |
| 50wt% | 9.6 | 0.227 |

The highest value of Pmax is obtained with the ratio of 15wt% in DES X with a value is equal to the reference.
Ideally, Pmax must be the highest possible. The higher the value of Pmax is, the more current can be drawn from the full cell.
Three dilutions seem to lead to good performances: from 10wt% to 25wt%. But, the highest electrochemical performance was obtained with the ratio of 15 wt% to the reference
However, the maximum seems to be in between 10 to 15wt%. At 50wt%, there is a dramatical drop in power caused by reduced mobility due to increased viscosity of the electrolyte.

**EXAMPLE 3: STUDY OF CRYSTALLIZATION OF DES X AT 10, 15, 25, 30 AND 40WT%**

**Equipment:** Biologic MPG-2-105
**Software:** EC-lab

**Parameters:**

At ambient temperature
**Dilutions of DES X:** 10wt%, 15wt%, 25wt%, 30wt%, 33wt%, 36wt% and 40wt%. **Test conditions:** For each dilution of DES X, 3 mL of the dilution were introduced in Petri dish and put in the oven at 40°C. The weight of Petri dish was checked every 2 hours. When the weight was stable, the presence of crystals was checked with microscope.

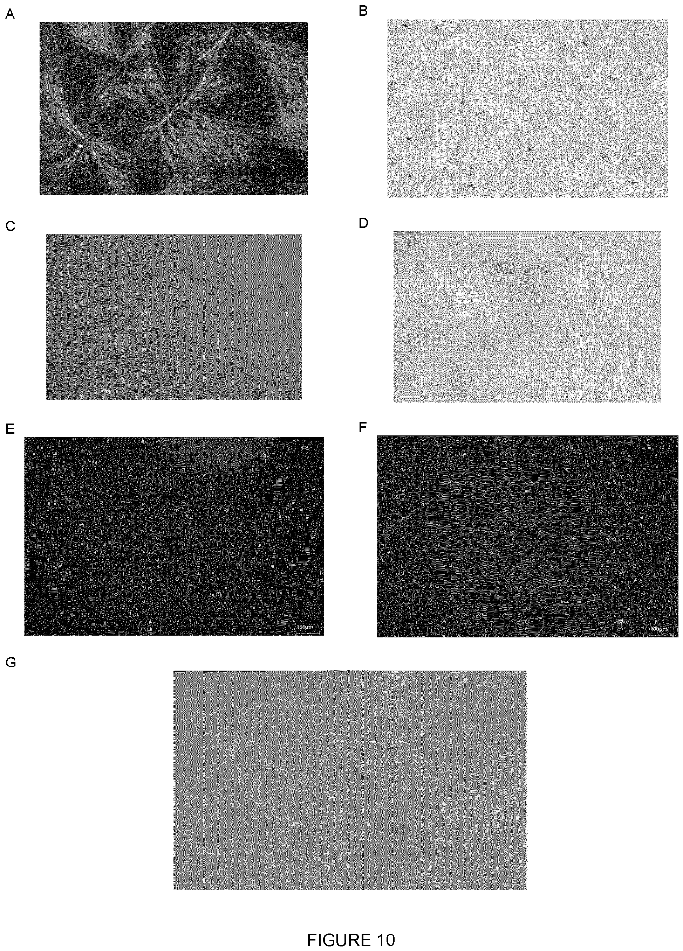

Figure 10 represents microscopic observation with (x5) at 10wt%, 15wt%, 25wt%, 30wt%, 33wt%, 36wt% and 40wt% of DES X (crystal size >100$\mu$m).
With this study it is possible to determine the dilution at which the DES X crystallizes after water evaporation. It was observed that by being at a dilution higher than 33 wt% no crystallization was observed after water evaporation, thus making available the electrolyte containing DES X when activating the full-cell and long term use. It was then necessary to link this with a second evaporation study, lifetime, to observe the electrochemical performances under these dilution conditions (between 33 and 40 wt%).

## EXAMPLE 4: LIFETIME STUDY OF FULL CELL USING DES X AT DIFFERENT DILUTIONS IN THE ELECTROLYTE SOLUTION

The aim of this test is to determine the lifetime of the full-cell system during activation with an electrolyte containing a certain percentage of DES X, and thus observe if this service life increases or stabilizes in the presence of DES X, thus allowing the system to operate over a longer time by simulating a slow and gradual activation. To this aim, the evaporation time of electrolytes composed of 33, 36 and 39wt% in DES X was measured by measuring at regular intervals the power of the biofuel cell over a few days period of time until total evaporation of the electrolyte.

**Equipment:** Biologic MPG-2-105
**Software:** EC-Lab
**Materials:** INK07-An / INK08-Ca
**Separator:** cigarette paper

**Enzymes:**

Cathodes were prepared with Laccase as catalyst and anode with Glucose oxidase as catalyst.

**Parameters:**

At ambient temperature (25°C) with 50% of humidity in climatic chamber.
For each dilution of DES X, there are 5 repetitions per electrolyte:

→ 33wt% DES X / 67wt% reference electrolyte
→ 36wt% DES X / 64 wt% reference electrolyte
→ 39wt% DES X / 61 wt% reference electrolyte
→ 0wt% DES X / 100 wt% reference electrolyte

**Experimental design:** to carry out this study, the folowing steps were developped:
First, activate all full cells with the right electrolyte for the first time with $300\mu L$. A first polarization was started after activation of the batteries.
A rest time of 2 hours between each polarization was required and this regardless of the time it takes.
A polarization was activated every two hours by reactivating $50\mu L$ with the same electrolyte.
**Test conditions:** for each dilution of DES X, 5 full cells were tested. Overall, 20 full cells were used for this study.

**Settings of Ec-Lab:**

OCV = corresponds to the potential when there is no current applied, during 20 min.
Polarization = current discharge (I) from $10\mu A$ to $600\mu A$ giving a potential (E) at each discharge. The power can then be obtained. The polarization was used at 5 seconds.

$$P\ (\mu W/cm^2) = E\ (V)\ x\ I\ (\mu A)$$

Observation of OCV at 33wt%, 36wt% and 39wt% of DES X on 8 days

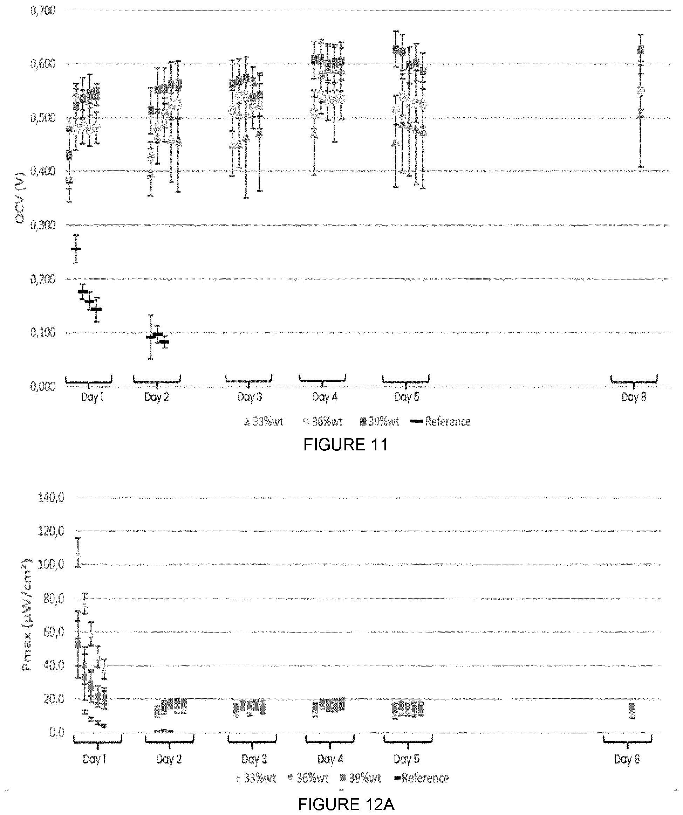

Figure 11 represents the OVC results for each dilution with reactivation in full cell. It has to be noted that during 8 days there are no value for full cells activated with the reference electrolyte because their performance was not high enough and cells went out of order. This is why cells were only tested for the first two days. With this set of experiments, different phenomena were observed: the value of OCV were stable with an increasing for electrolyte containing DES X, and for all dilution higher than the reference. The OCV of the reference decreases over the time.

<u>Observations of the value of Pmax at 33wt%, 36wt% and 39wt% of DES X over 8 days for polarization at 100ms, 2s and 5s.</u>

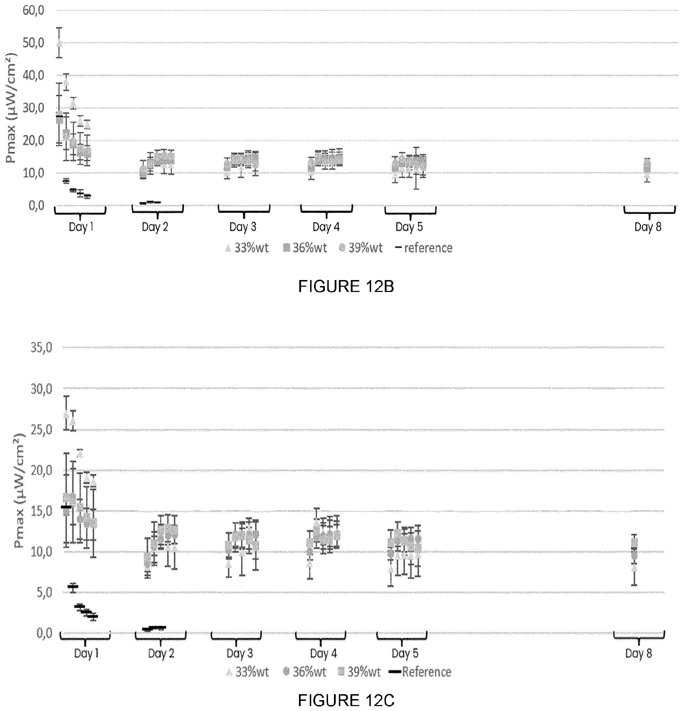

Figure 12 represents Pmax values for polarization at 100ms, 2s or 5s for each dilution of DES X over time. Between the first eight hours there are a taller drop of value for Pmax, potentially caused by flooding of the cathodic electrode and therefore a loss of power on the cathode electrode side. After the first eight hours there is a stabilization Pmax for each dilution even though cells were not activated at night and at weekends. This shows, with the DES X in electrolyte, that the electrochemical performances are more stable and a biofuel cell can last several days when it is activated slowly and gradually.

Electrochemical performances are better in the presence of DES X, especially at 39wt%. In addition, when full cells are reactivated as polarization occurs, performances decrease slowly, a plateau is reached where can be maintained a maximum power output for several days at $10\mu W/cm^2$ and the value of OCV between 0.5 and 0.6V. This stabilisation may be a consequence of the total evaporation of water and thus the presence of an electrolyte 100% in shape of DES.

**List of references**

[1] A. Thakur, P. Devi, Nano Energy 2022, 94, 106927.
[2] M. Prauzek, J. Konecny, M. Borova, K. Janosova, J. Hlavica, P. Musilek, Sensors (Basel) 2018, 18(8), 2446.
[3] E. Katz, K. MacVittie, Energy Environ Sci 2013, 6, 2791-2803.
[4] S. Cosnier, A. J. Gross, A. le Goff, M. Holzinger, J Power Sources 2016, 325, 252-263.
[5] P. Atanassov, M. Y. El-Naggar, S. Cosnier, U. Schröder, ChemElectroChem 2014, 1, 1702-1704.
[6] T. El Achkar, H. Greige-Gerges, S. Fourmentin, Environ. Chem. Lett. 2021, 19, 3397-3408.
[7] M. L. Toledo, M.M. Pereira, M. G. Freire, J. P. A. Silva, J. A. P. Coutinho, A. P. M. Tavares, ACS Sustainable Chem. Eng. 2019, 7, 13, 11806-11814.
[8] Y. Dai, G.-J. Witkamp, R. Verpoorte, Y. H. Choi, Food Chem. 2015, 187, 14-19.
[9] A. V. Gómez, C. C. Tadini, A. Biswas, M. Buttrum, S. Kim, V. M. Boddu, H. N. Cheng, LWT 2019, 107, 79-88.

**Claims**

1. Deep eutectic solvent-based electrolyte composition comprising (i) a hydrogen bond acceptor chosen from choline dihydrogen citrate (ChDHC) and choline chloride (ChCl), and (ii) at least one, two or three of the following hydrogen bond donors:

   - at least one polyol; and
   - glucose.

2. Deep eutectic solvent-based electrolyte composition according to claim 1, comprising at least three or four of the following metabolites:

   - choline dihydrogen citrate (ChDHC);
   - at least one polyol; and
   - glucose.

3. Deep eutectic solvent-based electrolyte composition according to claim 1 or 2, wherein the at least one polyol is selected from the group consisting of ethylene glycol, glycerol and xylitol.

4. Deep eutectic solvent-based electrolyte composition according to any of claims 1 to 3, wherein said composition comprises choline chloride and ethylene glycol.

5. Deep eutectic solvent-based electrolyte composition according to claim 4, wherein the molar ratio of choline chloride (ChCl):ethylene glycol is 1:2.

6. Deep eutectic solvent-based electrolyte composition according to any of claims 1 to 3, wherein said composition comprises choline dihydrogen citrate (ChDHC), glycerol and glucose.

7. Deep eutectic solvent-based electrolyte composition according to claim 6, wherein the molar ratio of choline dihydrogen citrate (ChDHC):glycerol:glucose is 1:1:2.5.

8. Deep eutectic solvent-based electrolyte composition according to any of claims 1 to 3, wherein said composition comprises choline dihydrogen citrate (ChDHC), xylitol and glucose.

9. Deep eutectic solvent-based electrolyte composition according to claim 8, wherein the molar ratio of choline dihydrogen citrate (ChDHC):xylitol:glucose is 2:1:1.

10. Deep eutectic solvent-based electrolyte composition according to any of claims 1 to 3, wherein said composition comprises choline dihydrogen citrate (ChDHC), glycerol, xylitol and glucose.

11. Deep eutectic solvent-based electrolyte composition according to claim 10, wherein the molar ratio of choline dihydrogen citrate (ChDHC):glycerol:xylitol:glucose is 3:1:1:1.

12. Deep eutectic solvent-based electrolyte composition according to any of claims 1 to 11, wherein the solvent is at least one polar solvent.

13. Deep eutectic solvent-based electrolyte composition according to claim 12, wherein the at least one polar solvent is water.

14. Use of a deep eutectic solvent based-electrolyte composition according to any of claims 1 to 13, at a dilution ranging from 33 to 40wt%.

15. Use of a deep eutectic solvent based-electrolyte composition according to claim 14, to activate an energy harvester or energy storage device, preferably a biofuel cell.

FIGURE 1

FIGURE 2A

FIGURE 2B

FIGURE 3A

FIGURE 3B

FIGURE 4A

FIGURE 4B

FIGURE 5A

FIGURE 5B

FIGURE 6A

FIGURE 6B

FIGURE 6C

FIGURE 7A

FIGURE 7B

FIGURE 8A

FIGURE 8B

FIGURE 9A

FIGURE 9B

FIGURE 9C

A

B

C

D

E

F

G

FIGURE 10

FIGURE 11

FIGURE 12A

FIGURE 12B

FIGURE 12C

Europäisches Patentamt

European Patent Office

Office européen des brevets

## EUROPEAN SEARCH REPORT

**Application Number**

EP 24 30 5331

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EL ACHKAR TRACY ET AL: "Basics and properties of deep eutectic solvents: a review", ENVIRONMENTAL CHEMISTRY LETTERS, SPRINGER INTERNATIONAL PUBLISHING, CHAM, vol. 19, no. 4, 20 April 2021 (2021-04-20), pages 3397-3408, XP037509234, ISSN: 1610-3653, DOI: 10.1007/S10311-021-01225-8 [retrieved on 2021-04-20] * Abstract; page 3402, left-hand column, line 25-37 * | 1,3-5 | INV. H01M8/08 H01M8/16 |
| X | BERNASCONI ROBERTO ET AL: "Copper electrodeposition from a chloride free deep eutectic solvent", JOURNAL OF ELECTROANALYTICAL CHEMISTRY, ELSEVIER, AMSTERDAM, NL, vol. 758, 23 October 2015 (2015-10-23), pages 163-169, XP029325020, ISSN: 1572-6657, DOI: 10.1016/J.JELECHEM.2015.10.024 * page 164, par. 2.1 * | 1-3,6 | |
| | ----- | | **TECHNICAL FIELDS SEARCHED (IPC)** |
| X | US 8 901 061 B2 (D AMBROGIO ROBERT [US]; PERU DEBORAH A [US] ET AL.) 2 December 2014 (2014-12-02) * column 11, left-hand column, lines 32-33 * | 1,3, 12-14 | H01M |
| | ----- | | |
| | -/-- | | |

The present search report has been drawn up for all claims

| Place of search | Date of completion of the search | Examiner |
|---|---|---|
| Munich | 20 September 2024 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

# EUROPEAN SEARCH REPORT

**Application Number**

EP 24 30 5331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rublova Y. ET AL: "Mechanistic Study on Surface Tension of Binary and Ternary Mixtures Containing Choline Chloride, Ethylene Glycol and Water (Components of Aqueous Solutions of a Deep Eutectic Solvent, Ethaline)", Phys.Chem, 1 January 2020 (2020-01-01), XP093201798, Retrieved from the Internet: URL:https://www.degruyter.com/document/doi /10.1515/zpch-2019-1492/html?lang=en * par. 3.2, pages 408-412 * | 1,3,4, 12-14 | |
| X | CN 116 315 230 A (UNIV HEBEI TECHNOLOGY) 23 June 2023 (2023-06-23) * Claim 5; Example 2 * | 1,3,4, 12,13,15 | |

**TECHNICAL FIELDS SEARCHED      (IPC)**

The present search report has been drawn up for all claims

| Place of search | Date of completion of the search | Examiner |
|---|---|---|
| Munich | 20 September 2024 | Bettio, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5331

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| US 8901061 | B2 | 02-12-2014 | AU | 2011371528 A1 | 02-05-2013 |
| | | | CA | 2839154 A1 | 27-12-2012 |
| | | | DO | P2013000254 A | 31-12-2013 |
| | | | EC | SP13013094 A | 31-01-2014 |
| | | | EP | 2723845 A1 | 30-04-2014 |
| | | | MX | 357477 B | 11-07-2018 |
| | | | US | 2014090671 A1 | 03-04-2014 |
| | | | UY | 34142 A | 03-01-2013 |
| | | | WO | 2012177276 A1 | 27-12-2012 |
| CN 116315230 | A | 23-06-2023 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. THAKUR** ; **P. DEVI**. *Nano Energy*, 2022, vol. 94, 106927
- **M. PRAUZEK** ; **J. KONECNY** ; **M. BOROVA** ; **K. JANOSOVA** ; **J. HLAVICA** ; **P. MUSILEK**. *Sensors (Basel)*, 2018, vol. 18 (8), 2446
- **E. KATZ** ; **K. MACVITTIE**. *Energy Environ Sci*, 2013, vol. 6, 2791-2803
- **S. COSNIER** ; **A. J. GROSS** ; **A. LE GOFF** ; **M. HOLZINGER**. *J Power Sources*, 2016, vol. 325, 252-263
- **P. ATANASSOV** ; **M. Y. EL-NAGGAR** ; **S. COSNIER** ; **U. SCHRÖDER**. *ChemElectroChem*, 2014, vol. 1, 1702-1704
- **T. EL ACHKAR** ; **H. GREIGE-GERGES** ; **S. FOUR-MENTIN**. *Environ. Chem. Lett.*, 2021, vol. 19, 3397-3408
- **M. L. TOLEDO** ; **M.M. PEREIRA** ; **M. G. FREIRE** ; **J. P. A. SILVA** ; **J. A. P. COUTINHO** ; **A. P. M. TAVARES**. *ACS Sustainable Chem. Eng.*, 2019, vol. 7 (13), 11806-11814
- **Y. DAI** ; **G.-J. WITKAMP** ; **R. VERPOORTE** ; **Y. H. CHOI**. *Food Chem.*, 2015, vol. 187, 14-19
- **A. V. GÓMEZ** ; **C. C. TADINI** ; **A. BISWAS** ; **M. BUTTRUM** ; **S. KIM** ; **V. M. BODDU** ; **H. N. CHENG**. *LWT*, 2019, vol. 107, 79-88